# EUROPÄISCHE PATENTANMELDUNG

(11) **EP 1 522 641 A1**
(43) Veröffentlichungstag der Anmeldung: **13.04.2005**
(21) Anmeldenummer: 03022611.2
(22) Anmeldetag: 06.10.2003
(51) Int. Cl.: E04B 1/76

(54) **Wärmedämm-Verbundsysteme sowie Dämmelement, Insbesondere Dämmplatte hierfür**

(71) Anmelder: SAINT-GOBAIN ISOVER G+H AG, 67059 Ludwigshafen (DE)
(72) Erfinder: Becker, Michael, 67374 Hanhofen (DE); Keller, Horst, 69259 Wilhelmsfeld (DE); Bernard, Jean-Luc, 60600 Giencourt Breuil Le Vert (FR); Andersson, Leif, 241 31 Eslöv (SE)
(74) Vertreter: GROSSE BOCKHORNI SCHUMACHER

(57) **Zusammenfassung**

Bei einem Wärmedämm-Verbundsystem mit mindestens einem Dämmelement aus in einem physiologischen Milieu löslichen Mineralfasern weist die Zusammensetzung der Mineralfasern des Dämmelements ein Alkali/Erdalkali Massenverhältnis von < 1 auf und ist die Faserstruktur des Dämmelements bestimmt durch einen mittleren geometrischen Faserdurchmesser ≤ 4 µm, eine Rohdichte im Bereich von 40 bis 100 kg/m³ und einen Anteil des Bindemittels im Bereich von 4 bis 7 Gew.-%, bezogen auf die Fasermasse des Dämmelements.

## Beschreibung

Die Erfindung betrifft ein Wärmedämm-Verbundsystem nach dem Oberbegriff des Patentanspruchs 1 sowie ein Dämmelement, insbesondere eine Dämmplatte nach dem Oberbegriff des Anspruches 12.

Derartige Wärmedämm-Verbundsyteme (WDVS) sind in der Praxis erfolgreich im Einsatz, wobei hierfür als Fasermaterial bevorzugt Steinwolle verwendet wird. Derartige Steinwolle wird dabei üblicherweise im Düsenblasverfahren oder mit externer Zentrifugierung, beispielsweise dem Kaskaden-Schleuderverfahren erzeugt. Dabei entstehen relativ grobe Fasern mit einem Durchmesser größer 4 bis 12 µm von relativ geringer Länge. Aufgrund der Herstellung fällt weiterhin ein erheblicher Anteil an unzerfasertem Material an, das in Form sogenannter "Perlen" im Produkt vorliegt und am Gewicht, nicht aber an der gewünschten Dämmwirkung, teilnimmt. Der Perlenanteil in Form von unzerfasertem Material liegt hierbei bei etwa 10 bis 30 % des Faseranteils mit Partikelgrößen von mindestens 50 µm.

Neben der Verwendung von Steinwolle als Fassadendämmplatte sind auch solche aus Glaswolle bekannt, wobei ein einfaches, aber charakteristisches Unterscheidungsmerkmal zwischen Glas- und Steinwolle als Untergruppen der Gattung Mineralwolle darin besteht, dass das Alkali/Erdalkali Massenverhältnis der jeweiligen Glaszusammensetzung normalerweise bei Steinwolle < 1 und bei Glaswolle > 1 ist. Dies bedeutet, dass Steinwolle einen hohen Anteil CaO + MgO von beispielsweise 20 bis 30 Gew.-% hat und einen relativ niedrigen Anteil von Na₂O + K₂O von beispielsweise etwa 5 Gew.-%. Glaswolle hingegen hat in der Regel Erdalkalibestandteile von beispielsweise etwa 10 Gew.-% und Alkalibestandteile von über 15 Gew.-%. Diese Zahlen gelten insbesondere für biolösliche Zusammensetzungen, also solche, die in einem physiologischen Milieu abbaubar sind.

Zur Herstellung der Fassadendämmplatten für ein solches WDVS werden die ausgezogenen Fasern der Steinwolle in der üblichen Weise auf einem Produktionsband abgelegt und sodann in Förderrichtung gestaucht, um einen erhöhten Anteil der Fasern stärker in Dickenrichtung der Steinwollebahn auszurichten, so dass diese quasi einen Lamellencharakter annimmt. Im unmittelbaren Anschluss daran erfolgt die Aushärtung unter gleichzeitiger Reduktion auf die gewünschte Plattendicken, so dass das Fasergefüge in dem gestauchten Zustand fixiert wird. Die so hergestellten Steinwolle-Platten können an die Fassade beispielsweise eines Massivbaus angeklebt und/oder mit Dübeln an dieser befestigt werden, wonach dann das Aufbringen eines üblicherweise armierten Putzes erfolgen kann, der von der Fassadendämmplatte getragen wird. Die Gesamtheit dieser Elemente bildet das WDVS. Die erhöhte Ausrichtung der Fasern in Plattendickenrichtung durch den Stauchvorgang führt zu der erforderlichen Abreißfestigkeit des Steinwollematerials gegen Windsogkräfte, Putzschwindung, Temperaturdehnung und Gewichtskraft des Putzes.

Derartige Fassadendämmplatten aus Steinwolle werden mit Rohdichten von etwa 120 bis 150 kg/m³ hergestellt und weisen eine relativ große Eigenfestigkeit auf. Durch die hohe Rohdichte ist im Falle einer Verdübelung die geforderte Dübeldurchzugsfestigkeit ohne weiteres gegeben, und im Verbund mit der Stauchung bereitet auch das Erreichen der geforderten Abreißfestigkeit kein Problem.

Es ist auch bekannt, derartige Fassadendämmplatten aus herkömmlicher Steinwolle als sogenannte Lamellenplatten herzustellen. Hierzu wird die Steinwolle ebenfalls in Produktionsrichtung gestaucht und ausgehärtet, danach aber in Produktionsrichtung zu sogenannten Lamellen geschnitten, derart, dass die Schneidbreite der einzelnen Lamellen die Dicke der so erzeugten Platte bestimmt, wobei die Schnittflächen die Hauptflächen der Platte bilden. Hierdurch wird der Umstand genutzt, dass bei der Faserablage der Fasern unterhalb des Zerfaserungsaggregats ein Großteil der weit überwiegend horizontal abgelegten Fasern in Querrichtung zur Produktionsrichtung abgelegt wird, so dass eine Lamelle eine Vielzahl von Fasern enthält, die in ihrer Dickenrichtung verlaufen. Diese Fasern liegen in dieser Ausrichtung auch an den Schnittflächen und damit an den Großflächen der Lamellen vor, während sie bei Stauchplatten im wesentlichen auf den Innenbereich der Platte beschränkt sind und im Bereich der Großfläche überwiegend oberflächenparallel ausgerichtete Fasern vorliegen.

Aufgrund dieser Ausrichtung der Fasern in den Lamellenplatten ist die Abreißfestigkeit äußerst hoch, da die Fasern im wesentlichen in Richtung von einer Plattengroßfläche zur anderen Plattengroßfläche ausgerichtet sind und in diese Richtung wirkende Zugkräfte, wie sie bei einer Abreißtendenz auftreten, als Zugkräfte in den einzelnen Fasern übertragen. Daher können Lamellenplatten aus Steinwolle mit einer Rohdichte von beispielsweise 80 kg/m³ verwendet werden und eignen sich insbesondere für eine klebende Befestigung, wobei jedoch auch bei dieser Rohdichte noch eine ausreichende Dübeldurchzugsfestigkeit erzielt werden kann, welche, insbesondere bei Anbringung der Lamellen auf einem nicht tragfähigem Untergrund, eine Befestigung durch Dübel erlaubt. Derartige Lamellenplatten aus Steinwolle sind somit leichter als entsprechende Stauchplatten und haben einen geringeren Materialeinsatz, sind aber im Hinblick auf die kompliziertere Herstellung insbesondere bei größeren Plattenformaten nicht unbedingt preisgünstiger.

Während derartige Putzträger-Fassadendämmplatten aus Steinwolle sich in der Praxis hervorragend bewährt haben, bestehen mit derartigen Steinwolleplatten Schwierigkeiten, günstige λ-Rechenwerte zu erreichen. In Deutschland wird der Wärmedurchlasswiderstand derartiger Dämmplatten gemäß DIN 18165 in Wärmeleitfähigkeitsgruppen eingeteilt, wobei etwa die Wärmeleitfähigkeitsgruppe 035 bedeutet, dass der λ-Rechenwert berechnet nach DIN 52612 35 mW/mK ist. Gestauchte Fassadendämmplatten aus herkömmlicher Steinwolle können mit Schwierigkeiten gerade die Wärmeleitfähigkeitsgruppe 040 erreichen. Lamellenplatten haben zwar relativ geringe Rohdichte, jedoch eine in Bezug auf das Wärmedämmvermögen ungünstige Faserausrichtung, so dass häufig nur die Wärmeleitfähigkeitsgruppe 045 erreicht wird. Stauchplatten haben andererseits zwar eine unter Wärmedämmgesichtspunkten günstigere Faserausrichtung in Richtung quer zur Wärmestromrichtung, müssen aber höhere Abreißfestigkeiten von mehr als 7 kPa und insbesondere von mehr als 14 kPa durch erhöhte Rohdichte erzielen, was wiederum zur Folge hat, dass die Wärmeleitfähigkeitsgruppe 040 in der Regel nicht unterschritten werden kann. Lediglich dann, wenn im Anwendungsfall die Abreißfestigkeit unter 7 kPa liegt, kann durch Rückgriff auf eine ungestauchte, also laminare Platte relativ geringer Rohdichte, von nur wenig über 100 kg/m³, die Wärmeleitfähigkeitsgruppe 035 erreicht werden.

Man hat auch schon versucht, mit Fassadendämmplatten aus Glaswolle zu arbeiten, die üblicherweise durch innere Zentrifugierung hergestellt wird. Dabei ist zu beachten, dass Glaswolle einem alkalischen Angriff aus dem Putzmaterial ausgesetzt ist, der zu einer Faserauflösung führen kann.

Daher hat man versucht, das verbesserte Wärmedämmvermögen von Glaswolle zur leichteren Erzielung der Wärmeleitfähigkeitsgruppe 035 dadurch zu nutzen, dass auf eine laminare Glaswolleplatte auf der Seite des Putzes werkseitig eine Beschichtung aufgebracht wurde, welche eine Berührung der Glaswolle mit dem Putz verhindern soll. In die Beschichtung ist ein Textilglas-Gittergewebe eingelegt. Auch derartige Fassadendämmplatten sind im praktischen Einsatz und haben sich für eine Dübelbefestigung auch durchaus bewährt. Das Textilglas-Gittergewebe mit einer Maschenweite von beispielsweise 18 mm x 12 mm weist eine Reißfestigkeit auf, die auch nach künstlicher Alterung in Natronlauge oder alkalischer Lösung nur um höchstens 50 % abfallen darf. Zur Stoßübergreifung muss das Textilglas-Gittergewebe an je einer Längs- und Querseite ca. 10 cm überstehen. Die Verwendung einer solchen beschichteten Glaswolle-Fassadedämmplatte ist jedoch nur in einem spezifizierten WDVS mit speziellen Gelenkdübeln mit einem Dämmstoffhalteteller von 60 mm Durchmesser sowie in Verbindung mit einem für das WDVS spezifizierten Putz zulässig. Für die Dübeldurchzugsfestigkeit sowie die Abreißfestigkeit ist ausschließlich das Textilglas-Gittergewebe im Verbund mit den speziellen Gelenkdübeln mit großem Halteteller ursächlich, welches werkseitig in die Beschichtung eingelegt ist.

Auf diese Weise gelingt es, die Wärmeleitfähigkeitgruppe 035 mit einer beschichteten und bewehrten Glaswolle-Fassadendämmplatte problemlos zu erreichen. Allerdings wird damit das Konzept, das Mineralwollematerial in einer solchen Art und Weise zur Verfügung zu stellen, dass es die erforderliche Abreißfestigkeit und, im Falle der Dübelbefestigung, Dübeldurchzugsfestigkeit selbst aufweist, verlassen und statt dessen auf eine eigene Stützkonstruktion in Form der in die Beschichtung eingebetteten Bewehrung zurückgegriffen. Dadurch ist die Verwendbarkeit auf vorspezifizierte Komponenten des gesamten WDVS eingeschränkt, sowie dass bei der Herstellung zusätzlicher Materialaufwand und zusätzliche Herstellschritte erforderlich sind, und das Textilglas-Gittergewebe bei Zuschneidarbeiten stört.

Aus der DE 101 38 069 ist auch bereits ein WDVS mit einer Putzträger-Fassadendämmplatte aus Glaswolle bekannt, bei dem die unbeschichtete Mineralwolleoberfläche zur direkten Aufbringung der Putzschicht verwendbar ist, also keiner Abdeckung oder Bewehrung bedarf. Hier handelt es sich jedoch um ganz spezielle Glaswollefasern, die in bestimmter Weise hydrophob ausgerüstet sind. Ansonsten wird wie üblicherweise bei herkömmlicher Steinwolle mit gestauchten Platten gearbeitet, so dass bei verminderter Rohdichte eine ausreichende Dübeldurchzugsfestigkeit und eine Abreißfestigkeit von mehr als 14 kPa bei einer Wärmeleitfähigkeitsgruppe von 040 erreicht werden kann.

Allerdings ist der Einsatz von Fassadendämmplatten aus Glaswollematerial durch die in der Praxis übliche Forderung nach einem Schmelzpunkt größer 1000°C (durch herkömmliche Steinwolle impliziert) beschränkt, welche insbesondere in Bereichen des öffentlichen Verkehrs und bei hohen Gebäuden gestellt wird.

Dem gegenüber liegt der Erfindung die Aufgabe zugrunde, ein Wärmedämm-Verbundsystem mit einer Wärmeleitfähigkeit entsprechend der Wärmeleitfähigkeitsgruppe 035 zu schaffen, welches eine für den jeweiligen Anwendungsfall ausreichend hohe Abreißfestigkeit bei mindestens 25% verringertem Gewicht gegenüber herkömmlicher Steinwolle aufweist, und gleichzeitig die Anforderungen der Praxis im Bereich von öffentlichem Verkehr und bei hohen Gebäuden gewährleistet sind, wie sie z.B. in den Qualitätsrichtlinien für Mineralwolle-Fassaden-Dämmplatten bei Wärmedämm-Verbundsystemen festgelegt sind (hrsg. vom Fachverband-Wärmedämm-Verbundsysteme e.V.).

Diese Aufgabe wird erfindungsgemäß durch die im kennzeichnenden Teil des Anspruchs 1 enthaltenen Merkmalen gelöst, wobei zweckmäßige Weiterbildungen der Erfindung durch die Merkmale der Unteransprüche gekennzeichnet sind. Schließlich schafft die Erfindung ein Dämmelement für ein WDVS, welches durch die kennzeichnenden Merkmale wenigstens eines der Ansprüche 1 bis 11 bestimmt ist.

Nach Maßgabe der Erfindung zeichnet sich das WDVS durch ein Dämmelement mit besonders fein ausgelegter Faserstruktur aus, welche durch Verwendung von Fasern bestimmt ist, deren mittlerer geometrischer Durchmesser ≤ 4 µm ist. Dadurch ergibt sich ein Fasergebilde, welches bei vorgegebener Rohdichte gegenüber herkömmlicher Steinwolle weit mehr Fasern pro Raumeinheit aufweist, was dazu führt, dass auch mehr Kreuzungspunkte zwischen den Fasern vorliegen. Durch Einstellung des Bindemittelanteils innerhalb des Dämmelements auf einen Bereich von 4 bis 7 Gew.-%, bezogen auf die Fasermasse des Dämmelements, ergibt sich über das Bindemittel insbesondere im Bereich der vielen Kreuzungspunkte ein stabiler Faserverbund des Mineralwollegebildes, welches sich durch hohe Abreißfestigkeit des Dämmelements auszeichnet. Dadurch dass die Rohdichte im Bereich von 40 bis 100 kg/m³ liegt, ergeben sich im Vergleich zu Dämmelementen aus herkömmlicher Steinwolle erhebliche Gewichtsvorteile, was sich wiederum günstig auf die Befestigungsart, etwa Kleben und/oder Dübeln auswirkt. Je geringer das Gewicht des zu befestigenden Dämmelements ist, je einfacher können die Befestigungsmaßnahmen ausgeführt werden. Dabei ist das Fasergebilde des Dämmelements jedoch ausreichend stabil, so dass auch die geforderte Dübeldurchzugsfestigkeit ohne weiteres gegeben ist. Trotz der verminderten Rohdichte ist dabei aber der Wärmedurchlasswiderstand offenbar aufgrund der feinausgelegten Faserstruktur höher als bei herkömmlichen Steinwollefasern hoher Rohdichte, so dass bei ausreichender mechanischer Festigkeit ohne weiteres die Wärmeleitfähigkeitsgruppe 035 erreicht wird. Da die Fasern zudem in ihrer Zusammensetzung auf ein Alkali/Erdalkali-Massenverhältnis von < 1 abgestellt sind, zeichnen sich die Fasern durch hohe Temperaturbeständigkeit aus, so dass das erfindungsgemäße Dämmelement der herkömmlichen Steinwolle vergleichbare Brandschutzeigenschaften aufweist und deswegen ohne Beschränkung auch im Bereich von öffentlichem Verkehr und in hohen Gebäuden eingesetzt werden kann.

Die Erfindung schafft damit eine Symbiose zwischen Glaswolle und herkömmlicher Steinwolle, indem sie strukturmäßig glaswollartig, also aus Fasern mit geringem Durchmesser und als Dämmelement mit geringer Rohdichte, ausgebildet ist, sich jedoch gleichwohl durch die hohe Temperaturbeständigkeit herkömmlicher Steinwollefasern auszeichnet. Deswegen bedarf das Dämmelement des erfindungsgemäßen WDVS keiner besonderen Behandlung, wie es im Falle von Fassadendämmplatten aus Glaswolle erforderlich ist, bei denen alkaliresistente Beschichtungen und das Einbetten von Gittergeweben oder eine entsprechend hydrophobe Ausrüstung von Glaswollefasern erforderlich ist. Gegenüber Dämmelementen aus herkömmlicher Steinwolle zeichnet sich die Erfindung durch mechanisch stabile und elastische Fasern aus, die eine ausreichend steife Struktur mit geringem Bindemitteleintrag auch bei geringerer Rohdichte erreicht und damit erhebliche Gewichtsvorteile gegenüber Dämmelementen aus herkömmlicher Steinwolle bringt.

Zweckmäßigerweise wird als Bindemittel ein organisches Bindemittel, wie etwa Phenol-Formaldehydharz oder Melaminharz verwendet, wobei in Folge des im Prinzip geringen Bindemittelanteils von 4 bis 7 Gew.-% auch der Brandlasteintrag vergleichsweise gering ist. Diese organischen Bindemittel wirken sich positiv für den Faserverbund aus, da sie eine gute Affinität zu den Fasern aufweisen und damit eine gute Durchnetzung des feinstrukturierten Gebildes ermöglichen.

In vorteilhafter Weise liegt der Anteil des Bindemittel bezogen auf die Fasermasse des Dämmelements im Bereich von nur 4 % bis 6 Gew.-%, wobei dieser Bindemittelanteil ausreicht, um eine vergleichsweise steife Fassadendämmplatte zu schaffen. Dies beruht auf der Kombination mit der fein ausgelegten Faserstruktur, bei der, bezogen auf einen vorgegebenen Fasergehalt, mehr feine Fasern und mehr Verknüpfungspunkte zwischen den Fasern vorliegen und somit durch das eingetragene Bindemittel ein stabiler und steifer Faserverbund erzielt wird.

Zweckmäßigerweise liegt die Rohdichte im Bereich von 70 bis 90 kg/m³, vorzugsweise beträgt sie etwa 85 kg/m³, so dass das erfindungsgemäße Dämmelement sich durch ein vergleichsweise geringes Gewicht ausweist bei gleichwohl großer Abreißfestigkeit und gewünschter Dübeldurchzugsfestigkeit.

Insbesondere zur Erzielung hoher Abreißfestigkeiten ist es zweckmäßig, dass das Dämmelement vor Aushärtung gestaucht wird, wobei sich gleichwohl eine Wärmeleitfähigkeit entsprechend der Wärmeleitfähigkeitsgruppe 035 erzielen lässt.

Für den Fall, dass eine geringere Abreißfestigkeit je nach Anwendungsfall ausreichend ist, kann das Dämmelement auch laminar ausgebildet sein. Bei laminarer Ausbildung des Dämmelements lässt sich ohne weiteres eine Wärmeleitfähigkeit entsprechend einer Wärmeleitfähigkeitsgruppe 030 erzielen. Da sich bei herkömmlicher Faserbildung ohnedies eine laminare Ausrichtung der Fasern innerhalb des Mineralwollevlieses ergibt, lässt sich ein solches Dämmelement sehr einfach herstellen und führt im Verbund mit der geringen Rohdichte im Bereich von 40 bis 100 kg/m³ zu entsprechenden Kostenvorteilen.

Wie Eingangs bereits beschrieben, ist es auch möglich, im Rahmen eines WDVS die dabei verwendeten Dämmelemente als Lamellen auszubilden, wobei diese ebenfalls aus der erfindungsgemäßen Mineralwolle hergestellt sind und eine Rohdichte im Bereich von 40 bis 70 kg/m³, vorzugsweise etwa 60 kg/m³, aufweisen.

Besonders vorteilhaft ist es, dass das Dämmelement in der Form einer gestauchten Platte eine Abreißfestigkeit von mindestens 14 kPa, in der Form einer laminaren Platte eine Abreißfestigkeit von mindestens 5 kPa, oder in der Form einer Lamelle eine Abreißfestigkeit von mindestens 80 kPa aufweist.

Zweckmäßigerweise weist das Dämmelement einen Schmelzpunkt nach DIN 4102, Teil 17 von größer 1.000 °C auf, was entsprechende Vorteile bezüglich der Temperaturbeständigkeit des Mineralwollegebildes zur Folge hat.

In vorteilhafter Weise sind die Mineralfasern des Dämmelements durch die an sich bekannte innere Zentrifugierung im Schleuderkorb-Verfahren mit einer Temperatur am Schleuderkorb von mindestens 1.100 °C hergestellt, wodurch sich in einfacher Weise Fasern mit dem anspruchsgemäß geringen Faserdurchmesser herstellen lassen. Ferner ist die dabei erzielte Mineralwolle praktisch perlenfrei, was einen weiteren wesentlichen Vorteil gegenüber herkömmlicher Steinwolle mit sich bringt. Das Verfahren der inneren Zentrifugierung im Schleuderkorb-Verfahren ist für Mineralfasern bereits bekannt, wozu ausdrücklich auf die EP 0 551 476, die EP 0 583 792, die WO 94/04468 und die US 6,284,684 wegen weiterer Einzelheiten verwiesen und Bezug genommen wird.

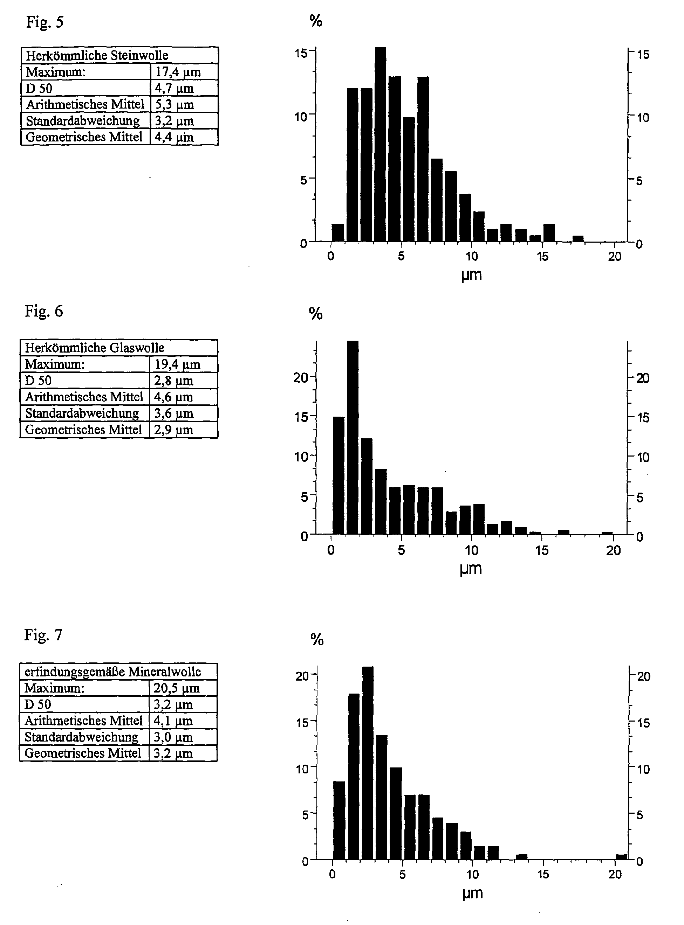

Der für die Faserfeinheit verantwortliche mittlere geometrische Durchmesser bestimmt sich aus der Häufigkeitsverteilung des Durchmessers der Fasern. Die Häufigkeitsverteilung lässt sich anhand einer Wolleprobe unter dem Mikroskop ermitteln. Es wird der Durchmesser einer großen Anzahl von Fasern ausgemessen und aufgetragen, wobei sich eine linksschiefe Verteilung ergibt (vgl. Fig. 5, 6 und 7).

Vorteilhaft sind die Dämmelemente bzw. Lamellen aus in einem physiologischen Milieu löslichen Mineralfasern gebildet, wobei diese gemäß den Anforderungen der europäischen Richtlinie 97/69/EG und/oder den Anforderungen der deutschen Gefahrstoffverordnung Abs. IV Nr. 22 entsprechen, wodurch eine gesundheitliche Unbedenklichkeit der Dämmelemente bzw. Lamelle bei Herstellung, Verarbeitung, Nutzung und Entsorgung gewährleistet ist.

Nachfolgend ist in einer Tabelle 1 die bevorzugte Zusammensetzung der Mineralfasern eines erfindungsgemäßen Dämmelementes bzw. Lamelle bereichsweise in Gew.-% angegeben.

**Tabelle 1**

| | | | |
|---|---|---|---|
| SiO₂ | 39-55 % | vorzugsweise | 40-52 % |
| Al₂O₃ | 16-27 % | vorzugsweise | 16-26 % |
| CaO | 9,5-20 % | vorzugsweise | 10-18 % |
| MgO | 1-5 % | vorzugsweise | 1-4,9 % |
| Na₂O | 0-15 % | vorzugsweise | 2-12 % |
| K₂O | 0-15 % | vorzugsweise | 2-12 % |
| R₂O (Na₂O + K₂O) | 10-14,7 % | vorzugsweise | 10-13,5 % |
| P₂O₅ | 0-3 % | insbesondere | 0-2 % |
| Fe₂O₃ (Eisen gesamt) | 1,5-15 % | insbesondere | 3,2-8 % |
| B₂O₃ | 0-2 % | vorzugsweise | 0-1 % |
| TiO₂ | 0-2 % | vorzugsweise | 0,4-1 % |
| Sonstiges | 0-2,0 % | | |

Das Dämmelement gemäß der Erfindung in Form einer Platte zeichnet sich durch einen leichtgewichtigen, gleichwohl mechanisch stabilen Aufbau mit hoher Temperaturbeständigkeit aus, und erfüllt darüber hinaus mindestens auch bei geringen Rohdichten die gemäß DIN 52612 vorgeschriebenen Anforderungen an die Wärmeleitfähigkeitsgruppen von 035. Entsprechend erreicht man bei der Ausbildung als Lamelle eine Wärmeleitfähigkeitsgruppe von 040.

Die Erfindung wird nachfolgend anhand von mehreren Ausführungsformen näher beschrieben und erläutert. Es zeigen:
- Fig. 1: eine Ausschnittsdarstellung aus einem erfindungsgemäßen WDVS,
- Fig. 2: einen Teilschnitt gemäß Linie II in Fig. 1 durch eine erfindungsgemäß zu verwendende Fassadendämmplatte in Form einer Stauchplatte, und
- Fig. 3: einen entsprechenden Teilschnitt einer erfindungsgemäß zu verwendenden Fassadendämmplatte in Form einer Lamellenplatte,

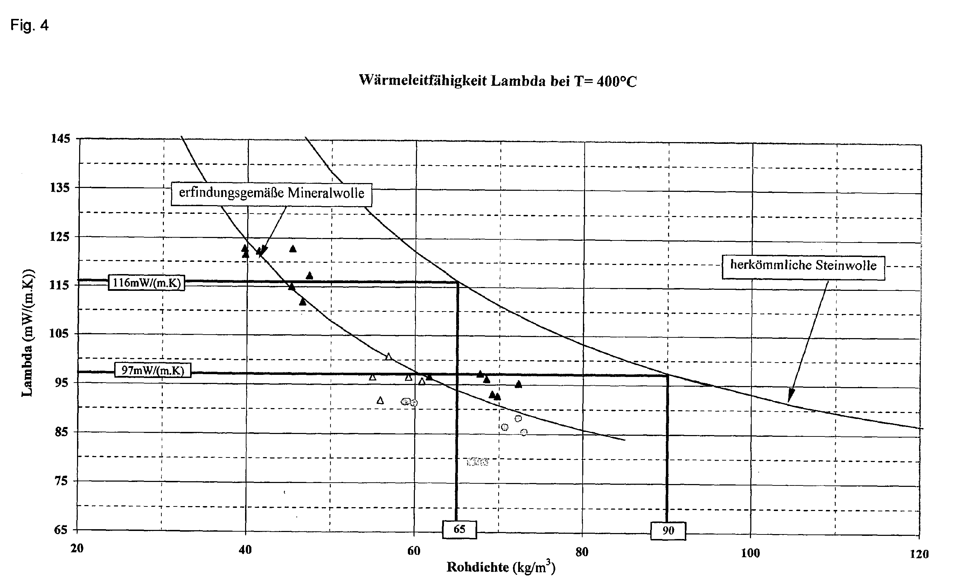

- Fig. 4: ein Diagramm eines Vergleichsversuchs im Rahmen einer Wärmeleitfähigkeitsprüfung bei 400°C,
- Fig. 5: ein typisches Faserhistogramm einer herkömmlichen Steinwolle,
- Fig. 6: ein typisches Faserhistogramm einer herkömmlichen Glaswolle, und
- Fig. 7: ein typisches Faserhistogramm einer erfindungsgemäßen Mineralwolle.

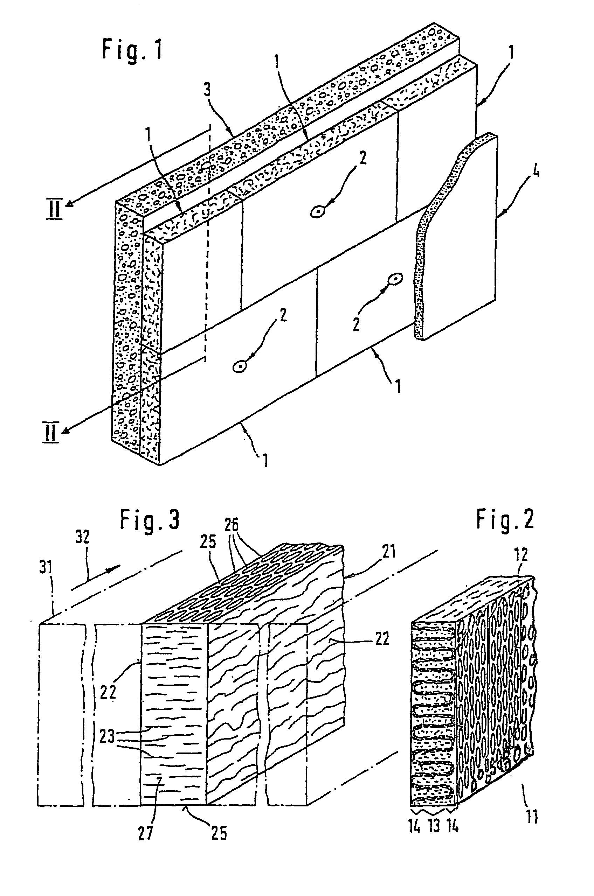

In Fig. 1 sind Putzträger-Fassadendämmplatten 1 mittels eines nicht näher dargestellten Klebers an eine Massivwand 3 geklebt und mit schematisch veranschaulichten Dübeln 2 an dieser befestigt. Die Fassadendämmplatten 1 sind zur Außenseite hin von einer üblicherweise armierten Putzschicht 4 (in Fig. 1 zur besseren Veranschaulichung mit übertriebener Dicke dargestellt) abgedeckt, welche von den Fassadendämmplatten 1 getragen wird. Ein solcher grundsätzlicher Aufbau eines WDVS ist bekannt und üblich, so dass sich ein näheres Eingehen hierauf erübrigt. Selbstverständlich können die Dübel in jeder geeigneten und für die jeweilige Halterung der Fassadendämmplatten erforderlichen Weise angeordnet und ausgebildet sein

Bei der Anbringung des WDVS wird die Massivwand 3 zunächst mit mit Kleber versehenen Fassadendämmplatten 1 in der veranschaulichten Weise belegt und dann werden die Dübel 2 an der Fassade der Massivwand 3 befestigt. Anschließend wird auf die Außenfläche der Fassadendämmplatte 1 die üblicherweise armierte Putzschicht 4 in der Regel in mehreren Schichten aufgebracht. Das Gewicht der Putzschicht 4 sowie die hierauf einwirkenden Kräfte wie insbesondere Windsogkräfte müssen somit von den Fasern der Fassadendämmplatten 1 gehalten werden, wobei die Fassadendämmplatten 1 ihrerseits wiederum gegen die Massivwand 3 durch die Dübel 2 gehalten sind. Infolgedessen darf eine gewisse Dübeldurchzugskraft nicht unterschritten werden, um zu vermeiden, dass die Fassadendämmplatten 1 unter der Einwirkung dieser Kräfte zusammen mit der Putzschicht 4 von der Massivwand 3 insbesondere unter Einwirkung von Windsogkräften abgehoben werden. Weiter benötigen die Fassadendämmplatten 1 eine erhebliche Abreiß- oder Querzugfestigkeit, damit sie die von der Putzschicht 4 einwirkenden Kräfte aufnehmen können.

Wesentlich für Fassadendämmelemente ist die Erzielung guter Wärmeleitfähigkeitswerte (λ-Rechenwerte nach DIN 18165), wobei die Wärmeleitfähigkeitsgruppe 035 oder besser angestrebt wird. Infolgedessen kann zur Erhöhung der erforderlichen Dübeldurchzugsfestigkeit sowie Abreißfestigkeit das erfindungsgemäß aus feinen, elastischen und langen Mineralwollefasern bestehende Mineralwollevlies im Zuge der Herstellung der Fassadendämmplatten 1 gestaucht und gemäß Fig. 2 als sogenannte Stauchplatte 11 eingesetzt werden. Hierzu werden die Platten nach Aushärtung der gestauchten Bahn durch Ablängen von der Mineralwollebahn hergestellt, wobei die Großflächen der Mineralwollebahn auch die Großflächen 12 der Stauchplatten 11 bilden. Infolge des Stauchvorgangs liegt eine wesentlich erhöhte Anzahl von Mineralfasern 13 im Inneren der Stauchplatte 11 in einer Ausrichtung der Dickenrichtung der Platte vor und erhöht somit die Abreißfestigkeit der Fassadendämmplatte 1.

In diesem Ausführungsbeispiel weist die dargestellte Fassadendämmplatte eine Rohdichte von 85 kg/m³ bei einem Bindemittelanteil von 5,5 Gew.-% auf. Diese Fassadendämmplatte ist gestaucht und besitzt eine Wärmeleitfähigkeit entsprechend der Wärmeleitfähigkeitsgruppe 035. Der mittlere geometrische Durchmesser der Fasern beträgt 3,2 µm.

Die Zusammensetzung in Gew.-% der konventionellen, also aus herkömmlicher Steinwolle gebildeten Dämmelemente bzw. Lamelle, sowie aus herkömmlicher Glaswolle gebildeten Dämmelemente bzw. Lamelle und der erfindungsgemäßen Dämmelemente bzw. Lamelle ergibt sich aus Tabelle 2, wobei die herkömmliche Steinwolle sowie das erfindungsgemäße Dämmelemente bzw. Lamelle einen Schmelzpunkt von mindestens 1000°C nach DIN 4102 Teil 17 aufweisen.

**Tabelle 2**

| Material | herkömmliche Steinwolle | herkömmliche Glaswolle | erfindungsgemäße Dämmelemente |
|---|---|---|---|
| SiO₂ | 57,2 | 65 | 41,2 |
| Al₂O₃ | 1,7 | 1,7 | 23,7 |
| Fe₂O₃ | 4,1 | 0,4 | 5,6 |
| TiO₂ | 0,3 | | 0,7 |
| CaO | 22,8 | 7,8 | 14,4 |
| MgO | 8,5 | 2,6 | 1,5 |
| Na₂O | 4,6 | 16,4 | 5,4 |
| K₂O | 0,8 | 0,6 | 5,2 |
| B₂O₃ | | 5 | |
| P₂O₅ | | 0,15 | 0,75 |
| MnO | | 0,3 | 0,6 |
| SrO | | | 0,5 |
| BaO | | | 0,34 |
| Total | 100 | 99,95 | 99,89 |

Die Faserdämmplatte zeichnet sich durch eine hohe Abreißfestigkeit von 15 kPa aus.

Bei der Ausführungsform gemäß Fig. 3 ist die Fassadendämmplatte 1 als Lamellenplatte 21 ausgebildet. Diese ist dadurch erzeugt, dass eine Mineralwollebahn, wie sie strichpunktiert im Querschnitt angedeutet und mit 31 bezeichnet ist, mit sehr hoher Dicke hergestellt und in Produktionsrichtung (Pfeil 32) in Streifen geschnitten wird, so dass die einzelnen Lamellen 21 erhalten werden. An den oberen (und unteren) Schmalseiten 25 der Lamellen 21 sind die Abdrücke der sogenannten "Flights" 26 zu erkennen, also von Druckbändern, zwischen denen die Mineralwollebahn 31 in einem Aushärteofen auf die gegenüber dem einlaufenden Rohvlies geringere, gewünschte und definierte Dicke komprimiert wird. Zwischen den beiden Großflächen 22 einer Lamelle 21 verlaufen quasi durchgehend rechtwinklig zu beiden Großflächen die Mineralfasern 23, wie auf der Stirnfläche 27 angedeutet. Diese Ausrichtung der Mineralfasern 23 resultiert zum Einen aus der Ablage der Mineralfasern im Mineralwollevlies in Querrichtung zur Produktionsrichtung (Pfeil 32) und zum Anderen durch eine Stauchung des Rohvlieses. Die Lamelle wird mit der einen Großfläche 22 an der Massivwand 3 durch Kleben und Dübeln angebracht. Die Putzschicht 4 wird dann unmittelbar auf der anderen Großfläche 22 aufgebracht.

Bei einem derartigen Fassadenaufbau ergibt sich eine hervorragende Abreißfestigkeit, welche bereits bei Rohdichten ab 40 kg/m³ auch die gewünschte Dübeldurchzugsfestigkeit aufweist und trotz der unter Wärmedämmgesichtspunkten ungünstigen Faserausrichtung infolge der geringen Rohdichte eine Erzielung der Wärmeleitfähigkeitsgruppe 040 ermöglicht. Im Beispielsfall liegt die Rohdichte der Lamelle 21 bei 60 kg/m³.

In nicht näher dargestellter Weise kann anstelle der Stauchplatte 11 oder der Lamellenplatte 21 auch eine laminare Platte verwendet werden, bei der die Fasern im wesentlichen parallel zu den Großflächen der Platten ausgerichtet sind. Dies ist die Faserablage, wie sie sich unter dem Zerfaserungsaggregat von selbst ergibt, so dass keinerlei Nachbearbeitungen erforderlich sind. Im Verbund mit einer Rohdichte von beispielsweise 80 kg/m³ ergibt sich somit eine einfache und kostengünstige Herstellung bei relativ geringem Materialeinsatz und so eine kostengünstige Fassadendämmplatte. Insbesondere aber ergibt die im wesentlichen parallel zu den Großflächen liegende Ausrichtung der Fasern einen hohen Wärmedurchlasswiderstand, so dass mit einer solchen laminaren Platte erstmals im Vergleich zu Fassadendämmplatten aus herkömmlicher Steinwolle ein λ-Rechenwert von unter 30 mW/mK, also die Wärmeleitfähigkeitsgruppe 030 erreicht wird

Auch bei der Verwendung von Stauchplatten 11 liegt bei einer Rohdichte von 70 bis 90 kg/m³ der λ-Rechenwert bei etwa 32 mW/mK, während er bei einer entsprechenden Platte aus Glaswollmaterial aus demselben Rohdichtebereich nur bei 35 mW/mK liegt. Während also die erfindungsgemäße Stauchplatte die Wärmeleitfähigkeitsgruppe 035 einhält, erreicht die Stauchplatte aus Glaswollmaterial nur die Wärmeleitfähigkeitsgruppe 040.

Da die Fasern zudem in ihrer Zusammensetzung auf ein Alkali/Erdalkali-Massenverhältnis von < 1 abgestellt sind, ist ein alkalischer Angriff durch das Putzmaterial nicht zu befürchten, und somit kann ohne Zwischenschaltung alkaliresistenter Schutzschichten die Putzschicht 4 unmittelbar auf den jeweiligen Großflächen der Dämmelemente bzw. Lamellen aufgetragen werden.

Schließlich wird ein WDVS gefordert, das in der Form eines selbsttragenden Dämmelements als Sandwich mit zwei beabstandeten Außenschalen, zwischen denen mindestens eine Dämmschicht aus gebundenen, in einem physiologischen Milieu löslichen Mineralfasern angeordnet sind und welches insbesondere eine Temperaturbeständigkeit zur Einhaltung der Anforderungen der normativen Feuerwiderstandsklassen oder dergl. aufweist, das gegenüber herkömmlichen derartigen Dämmelementen bei Einhaltung hoher normativer Feuerwiderstandsanforderungen eine Gewichtseinsparung um mindestens 20 % erlaubt und dabei die normativen Forderungen eines Alterungsverhaltens (DUR2-Test nach prEN 14509) erfüllt.

Die Brandschutzanforderungen von Brandschutzelementen sind gemäß DIN 4102, Teil 5 in Feuerwiderstandsklassen klassifiziert. Diese Feuerwiderstandsklassen gelten auch für derartige Sandwich-Dämmelemente. Die Feuerwiderstandsfähigkeit eines Sandwich-Dämmelements wird hierbei durch die Zeitdauer bestimmt, bei der bei einem bestimmten Temperaturanstieg an einer Seite des Elements die andere "kalte" Seite des Elements unter einer definierten Grenztemperatur bleibt. Die Zeitdauer in Minuten bis zum Erreichen der Grenztemperatur auf der kalten Seite wird als Standzeit bezeichnet. Diese bestimmt die Einstufung in die verschiedenen Feuerwiderstandklassen. So bedeutet eine Einstufung eines Elements in die Feuerwiderstandsklasse F30 eine mindestens 30-minütige Standzeit bzw. F60 und F90 eine 60-minütige und 90-minütige Standzeit. Während dieser Standzeiten muß sichergestellt sein, dass die Brandschutzwirkung des Sandwich-Dämmelements gewährleistet ist, d.h. es darf während dieser Zeiten keine Flamme auf der dem Feuer abgewandten Seite austreten, die aus dem Verbrennen der in das Sandwich-Dämmelement eingetragenen Brandlast, sprich organisches Bindemittel, resultiert.

Diese Forderung wird in einfacher Weise durch einen speziellen Aufbau der in dem Sandwich-Dämmelement angeordneten Dämmschicht erreicht, und zwar derart, dass die Zusammensetzung der Mineralfasern der Dämmschicht ein Alkali/Erdalkali-Massenverhältnis von < 1 aufweist, und dass die Faserstruktur der Dämmschicht bestimmt ist durch einen mittleren geometrischen Faserdurchmesser ≤ 4 µm und einen Anteil des Bindemittels bezogen auf die Fasermasse der Dämmschicht von 4 bis 8 Gew.-% mit einer Rohdichte im Bereich von 50 bis 80 kg/m³ bei den Feuerwiderstandsklassen F 30, F 45 und F 60 und mit einer Rohdichte im Bereich von 80 bis 120 kg/m³ bei den Feuerwiderstandsklassen F 90 und F 120.

Hiermit erhält das Sandwich-Dämmelement eine vergleichsweise geringe Rohdichte, d.h. Gewicht, so dass diese leichter sind und somit ermüdungsfreier transportiert und montiert werden können. Trotz eines vergleichsweise hohen absoluten Bindemittelgehaltes, der sich einerseits in einer relativ hohen Steifigkeit des Sandwich-Dämmelements ausdrückt, wirkt sich dieser andererseits nicht schädlich auf das Brandverhalten aus.

Dabei ist das erfindungsgemäße WDVS vorteilhaft so aufgebaut, dass die Dämmschicht durch mindestens einer Lamelle gebildet ist, wogegen die Außenschalen vorzugsweise aus Metall bestehen und mit den Großflächen der Dämmschicht, z.B. mittels eines geschäumten Klebers auf PU-Basis, haftfest verklebt sind. Diese erhöhte Haftfestigkeit beruht auf dem Umstand, dass aufgrund der feinen Faserstruktur der Dämmschicht eine Vielzahl von Fasern in Kontakt mit dem Kleber sind und somit in ihrer Vielzahl zu einem Kraftschluß mit den Außenschalen zur Verfugung stehen. Ferner kann aufgrund der Tatsache, dass die Zusammensetzung der Mineralfasern der Dämmschicht ein Alkali/Erdalkali-Massenverhältnis von < 1 aufweist, auch ein anorganischer, insbesondere alkalischer Kleber wie Wasserglas verwendet werden, was neben einer erheblichen Kostenreduzierung auch die Brandlast nicht unwesentlich verringert. Bezüglich der Verwendung von geschäumtem Kleber auf Wasserglasbasis wird ausdrücklich auf die EP 0 728 124 verwiesen.

Es hat sich gezeigt, dass die Druckspannung der Dämmschicht erfindungsgemäßer Sandwich-Dämmelemente vorzugsweise bei 10 % Stauchung nach DIN EN 826 ≥ 80 kPa und die Abreißfestigkeit DIN EN 1607 ≥ 100 kPa beträgt, wodurch den statischen Anforderungen, insbesondere beim Hallenbau Rechnung getragen werden kann.

Trotz der erheblichen Rohdichtereduzierung bei dem erfindungsgemäßen Sandwich-Dämmelement gegenüber einem solchen aus herkömmlicher Steinwolle hat sich gezeigt, dass das Alterungsverhaltens (DUR2-Test nach prEN 14509) praktisch vergleichbar ist. Bezüglich herkömmlicher Glaswolle hat sich gezeigt, dass hier das Alterungsverhalten um etwa einen Faktor 2 besser ist, und zwar bezogen auf den Verlust der Abreißfestigkeit nach DIN EN 1607.

## Patentansprüche

1. Wärmedämm-Verbundsystem mit mindestens einem Dämmelement aus gebundenen, in einem physiologischen Milieu löslichen Mineralfasern, bei dem das Dämmelement insbesondere mehrfach an einer Gebäudewand zu einer Dämmschicht angebracht ist, welche gegebenenfalls mittels Dübeln am Untergrund der Gebäudewand befestigt und mit mindestens einer vorzugsweise armierten Putzschicht abgedeckt ist, **dadurch gekennzeichnet, dass** die Zusammensetzung der Mineralfasern des Dämmelements ein Alkali/Erdalkali-Massenverhältnis von < 1 aufweist, und dass die Faserstruktur des Dämmelements bestimmt ist durch einen mittleren geometrischen Faserdurchmesser ≤ 4 µm, eine Rohdichte im Bereich von 40 bis 100 kg/m³ und einen Anteil des Bindemittels bezogen auf die Fasermasse des Dämmelements im Bereich von 4 bis 7 Gew.-%.

2. Wärmedämm-Verbundsystem nach Anspruch 1, **dadurch gekennzeichnet, dass** das Bindemittel ein organisches Bindemittel ist.

3. Wärmedämm-Verbundsystem nach Anspruch 1 oder 2, **dadurch gekennzeichnet, dass** der Anteil des Bindemittels bezogen auf die Masse des Dämmelements im Bereich von 4 bis 6 Gew.-% liegt.

4. Wärmedämm-Verbundsystem nach einem der vorhergehenden Ansprüche, **dadurch gekennzeichnet, dass** die Rohdichte des Dämmelements in der Form einer Platte im Bereich von 70 bis 90 kg/m³, vorzugsweise etwa 85 kg/m³, oder in der Form einer Lamelle im Bereich von 40 bis 70 kg/m³, vorzugsweise etwa 60 kg/m³, liegt.

5. Wärmedämm-Verbundsystem nach einem der vorhergehenden Ansprüche, **dadurch gekennzeichnet, dass** das Dämmelement gestaucht ist und eine Wärmeleitfähigkeit entsprechend der Wärmeleitfähigkeitsgruppe 035 gemäß DIN 18165 oder dergl. hat.

6. Wärmedämm-Verbundsystem nach einem der vorhergehenden Ansprüche, **dadurch gekennzeichnet, dass** das Dämmelement laminar ist und eine Wärmeleitfähigkeit entsprechend einer Wärmeleitfähigkeitsgruppe 030 gemäß DIN 18165 oder dergl. hat.

7. Wärmedämm-Verbundsystem nach einem der vorhergehenden Ansprüche, **dadurch gekennzeichnet, dass** das Dämmelement in der Form einer laminaren Platte eine Abreißfestigkeit von mindestens 5 kPa, in der Form einer gestauchten Platte eine Abreißfestigkeit von mindestens 14 kPa oder in der Form einer Lamelle eine Abreißfestigkeit von mindestens 80 kPa aufweist.

8. Wärmedämm-Verbundsystem nach einem der vorhergehenden Ansprüche, **dadurch gekennzeichnet, dass** das Dämmelement einen Schmelzpunkt nach DIN 4102, Teil 17 von ≥ 1.000 °C aufweist.

9. Wärmedämm-Verbundsystem nach einem der vorhergehenden Ansprüche, **dadurch gekennzeichnet, dass** die Mineralfasern des Dämmelements durch eine innere Zentrifugierung im Schleuderkorbverfahren mit einer Temperatur am Schleuderkorb von mindestens 1.100 °C hergestellt sind.

10. Wärmedämm-Verbundsystem nach einem der vorhergehenden Ansprüche, **dadurch gekennzeichnet, dass** die Mineralfasern des Dämmelements hinsichtlich ihrer Löslichkeit in einem physiologischen Milieu gemäß den Anforderungen der europäischen Richtlinie 97/69/EG und/oder den Anforderungen der deutschen Gefahrstoffverordnung Abs. IV Nr. 22 entsprechen

11. Wärmedämm-Verbundsystem nach Anspruch 10, **gekennzeichnet durch** folgende Bereiche der chemischen Zusammensetzung der Mineralfasern in Gew.-%:
| | | | |
|---|---|---|---|
| SiO₂ | 39-55 % | vorzugsweise | 40-52 % |
| Al₂O₃ | 16-27 % | vorzugsweise | 16-26 % |
| CaO | 9,5-20 % | vorzugsweise | 10-18 % |
| MgO | 1-5 % | vorzugsweise | 1-4,9 % |
| Na₂O | 0-15 % | vorzugsweise | 2-12 % |
| K₂O | 0-15 % | vorzugsweise | 2-12 % |
| R₂O (Na₂O + K₂O) | 10-14,7 % | vorzugsweise | 10-13,5 % |
| P₂O₅ | 0-3 % | insbesondere | 0-2 % |
| Fe₂O₃ (Eisen gesamt) | 1,5-15 % | insbesondere | 3,2-8 % |
| B₂O₃ | 0-2 % | vorzugsweise | 0-1 % |
| TiO₂ | 0-2 % | vorzugsweise | 0,4-1 % |
| Sonstiges | 0-2,0 % | | |

12. Dämmelement für ein Wärmedämm-Verbundsystem **gekennzeichnet durch** die kennzeichnenden Merkmale wenigstens eines der Ansprüche 1 bis 11.

13. Wärmedämm-Verbundsystem in der Form eines selbsttragenden Dämmelements als Sandwich mit zwei beabstandeten Außenschalen, zwischen denen mindestens eine Dämmschicht aus gebundenen, in einem physiologischen Milieu löslichen Mineralfasern angeordnet sind und welches insbesondere eine Temperaturbeständigkeit zur Einhaltung der Anforderungen der normativen Feuerwiderstandklassen oder dergl. aufweist, **dadurch gekennzeichnet, dass** die Zusammensetzung der Mineralfasern der Dämmschicht ein Alkali/Erdalkali-Massenverhältnis von < 1 aufweist, und dass die Faserstruktur der Dämmschicht bestimmt ist durch einen mittleren geometrischen Faserdurchmesser ≤ 4 µm und einen Anteil des Bindemittels bezogen auf die Fasermasse der Dämmschicht von 4 bis 10 Gew.-%, vorzugsweise 4 bis 9 Gew.-% mit einer Rohdichte im Bereich von 50 bis 80 kg/m³ bei den Feuerwiderstandsklassen F 30, F 45 und F 60 und mit einer Rohdichte im Bereich von 80 bis 120 kg/m³ bei den Feuerwiderstandsklassen F 90 und F 120.

14. Wärmedämm-Verbundsystem nach Anspruch 13, **dadurch gekennzeichnet, dass** die Dämmschicht durch mindestens einer Lamelle gebildet ist, wogegen die Außenschalen vorzugsweise aus Metall bestehen und mit den Großflächen der Dämmschicht verklebt sind.

15. Wärmedämm-Verbundsystem nach Anspruch 13 und 14, **dadurch gekennzeichnet, dass** die Druckspannung der Dämmschicht bei 10 % Stauchung nach DIN EN 826 ≥ 80 kPa und die Abreißfestigkeit DIN EN 1607 ≥ 100 kPa beträgt.

16. Wärmedämm-Verbundsystem nach einem der Ansprüche 13 bis 15, **gekennzeichnet durch** die kennzeichnenden Merkmale wenigstens eines der Ansprüche 2, 8 bis 11.
